# EUROPEAN PATENT SPECIFICATION

(11) **EP 0 600 634 B1**
(45) Date of publication and mention of the grant of the patent: **31.01.1996**
(21) Application number: 93309160.5
(22) Date of filing: 17.11.1993
(51) Int. Cl.: H01H 13/06, H01H 11/00

(54) **Electric switch**
Elektrischer Schalter
Interrupteur électrique

(30) Priority: 30.11.1992 GB 9225052
(43) Date of publication of application: 08.06.1994
(73) Proprietor: BURGESS MICRO SWITCH COMPANY LTD, Gateshead Tyne & Wear, NE11 0UB (GB)
(72) Inventor: Holmes, Raymond, Co Durham DH3 4DE (GB)
(74) Representative: Sanderson, Michael John

(56) References cited:
- FR-A- 1 402 906
- FR-A- 1 410 425
- GB-A- 789 752
- US-A- 3 085 140

## Description

This invention relates to electric switches, and more particularly to sealed snap-action electric microswitches and a method of manufacturing such switches.

Snap-action microswitches commonly comprise a large number - typically eight to ten - of individual components all of which must be assembled together to form the final product. Such assembly can be a delicate, time-consuming and therefore expensive exercise.

It has been proposed to provide a moulded base portion to the switch housing in which are encapsulated the electrical terminals of the switch, and whereby the base portion and said terminals comprise a single unit thus reducing the number of separate components to the switch.

However, there still remain as separate components, as well as the snap-action mechanism itself, the lid portion of the housing, the seal between the lid portion and the base portion of the housing, the operating plunger and the sealing cowl between the plunger and the lid portion.

It is essential to ensure that the interior of the housing is completely sealed, and there are various methods used to secure and seal the cowl to the lid portion, for example stretching the cowl over the plunger to utilise its inherent elasticity to effect the seal or sticking the cowl to the plunger and the associated region of the housing.

Such procedures are again awkward to carry out, while switches can be subjected to large numbers of operations which require the seals therearound to be capable of withstanding extensive flexing and distortion.

French specification no. 1402906 discloses a microswitch according to the preamble of claim 1, in which the lid portion, the cowl and the plunger are all made from the same material. This material must be relatively rigid to enable the lid portion to perform its normal function without deforming. Consequently, even if the cowl is relatively thin, there is still a severe limitation upon the flexibility of the cowl that can be achieved, because of the inherent rigidity of the material from which it is made.

US specification no. 3085140 discloses an electric switch which, subsequent to assembly, is encapsulated in a sealing and insulating material.

It would be desirable to be able to provide a snap-action microswitch capable of more ready assembly than heretofore, and a method of manufacturing the same.

According to a first aspect of the present invention there is provided a snap-action electric microswitch comprising a housing including a base portion from which project a plurality of electric terminals, a lid portion for location on the base portion to complete the housing, a snap-action mechanism within the housing, an operating plunger slidably mounted in the lid portion to effect actuation of the snap-action mechanism, a peripheral seal member between the lid portion and the base portion of the housing, and a flexible cowl reacting between the plunger and the lid portion of the housing whereby the plunger is sealingly mounted in the lid portion, characterised in that the lid portion and plunger are of a first plastics material and the cowl is of a second plastics material, the lid portion, plunger and cowl being an integral, injection moulded unit, the first and second plastics materials being such that the abutting surfaces of the cowl with the lid portion and with the plunger bond together during the injection moulding process.

Preferably the peripheral seal is of said second plastics material and is formed integrally with the lid portion during the injection moulding process to be welded to the lower periphery of the lid portion during said process.

Conveniently the lid portion and plunger comprise a glass-filled polyamide, and the cowl and peripheral seal comprise a thermoplastic elastomer.

According to a second aspect of the present invention there is provided a method of manufacturing the aforesaid snap-action electric microswitch including the steps of:
providing a moulding tool having a fixed upper portion and at least one core capable of defining, together with said fixed upper portion, a first volume within the tool corresponding in shape with that of the lid portion and the plunger of the switch, and a second volume within the tool corresponding in shape with that of the cowl, said second volume communicating with regions of said first volume;
defining said first volume within the moulding tool;
injecting a first plastics material into said first volume to form said lid portion and said plunger;
defining said second volume within the moulding tool, and
injecting a second plastics material into said second volume to form said cowl,
the first and second plastics materials being welded together during the injection moulding process whereby the cowl is bonded to both the lid portion and the plunger to effect a flexible seal therebetween.

In a preferred method, the fixed upper portion and the at least one core of the moulding tool are such that, on defining said second volume, a third volume corresponding in shape with that of the peripheral seal between the lid portion and the base portion of the housing is defined within the tool, the second and third volumes being interconnected whereby, on injection of said second plastics material into the second and third volumes, a peripheral seal is formed around, to be bonded to, the periphery of the lid portion.

Preferably, the moulding tool includes a first removable core which, together with the fixed upper portion, defines said first volume, and a second removable core which, together with the fixed upper portion, defines said second volume, while it is further preferred that the second removable core, together with said fixed upper portion of the tool, also defines said third volume.

Thus it will be appreciated that the switch of the invention can be such as to consist of only three separate components that must thereafter be assembled together, namely a base portion with integral terminals, a lid portion with integral plunger, cowl and peripheral seal, and the snap-action mechanism itself.

By way of example only, the aspects of the invention will now be described in greater detail with reference to the accompanying drawings of which:
Figs. 1 and 2 are a longitudinal vertical section and a transverse vertical section respectively of a switch according to the invention in its inoperative condition;
Fig. 3 is a plan view from below of the lid portion and attached components of the switch of Figs. 1 and 2;
Fig. 4 is a longitudinal vertical section equivalent to that of Fig. 1 but with the switch in its operative condition;
Fig. 5 is the switch of Fig. 1 with a bottom cover thereon enclosing the terminals of the switch;
Fig. 6 is a vertical section through a moulding tool incorporating a first removable core for forming the lid portion and plunger of a switch according to the invention, and
Fig. 7 is a vertical section through the tool of Fig. 6 incorporating a second removable core for forming the cowl and peripheral seal of a switch according to the invention.

Referring to the drawings, the illustrated switch is of relatively conventional overall construction in its lower and intermediate regions, comprising a moulded base portion 2, typically of a glass-filled polyamide, in which are encapsulated an anchor terminal 4, a bottom contact terminal 6 and a top contact terminal 8, said terminals respectively including, above the base portion 2, an anchor member 10, a bottom contact 12 and a top contact 14.

A support member 16 integral with the anchor terminal 4 and having a notched face thereto upstands from the base portion 2 to complete the mounting for a conventional snap-action mechanism indicated generally at 18 and including a contact member 20 movable between a first position engaging the contact 14 and a second position engaging the contact 12 thereby to alter the electrical condition of the switch.

The switch is completed by a lid portion 22 which incorporates the novel features of the invention as will be apparent from the following description.

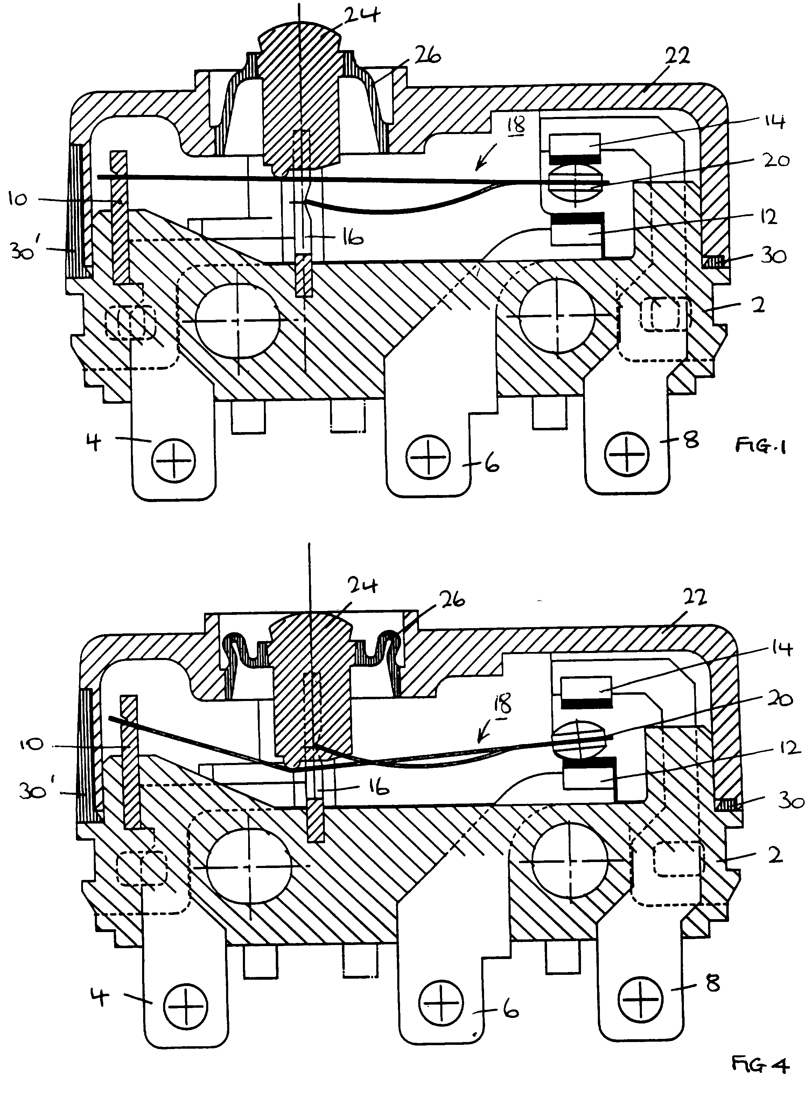

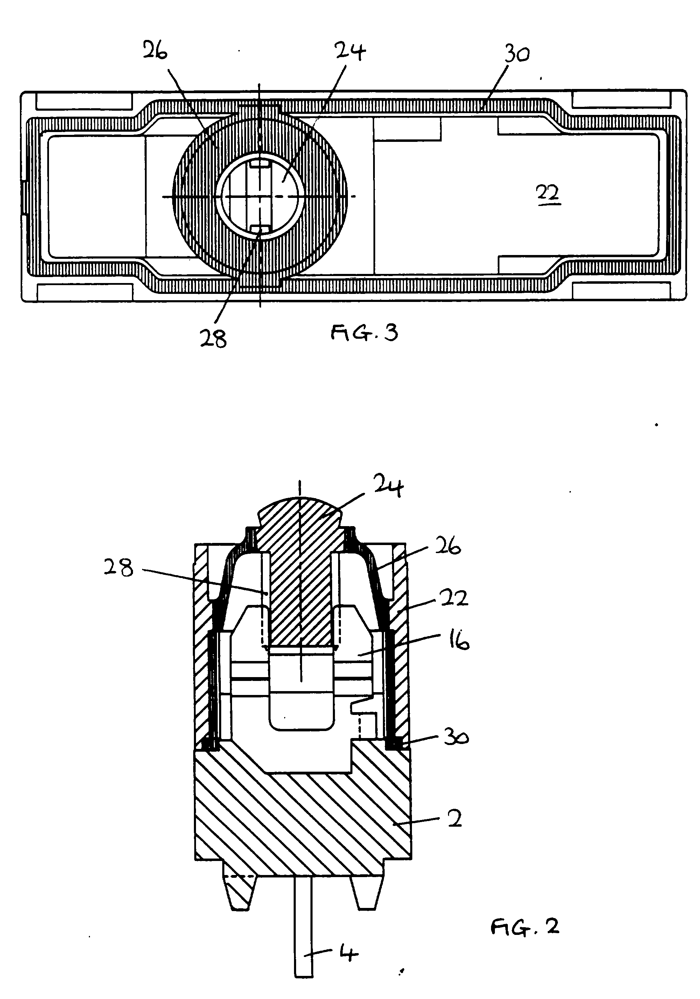

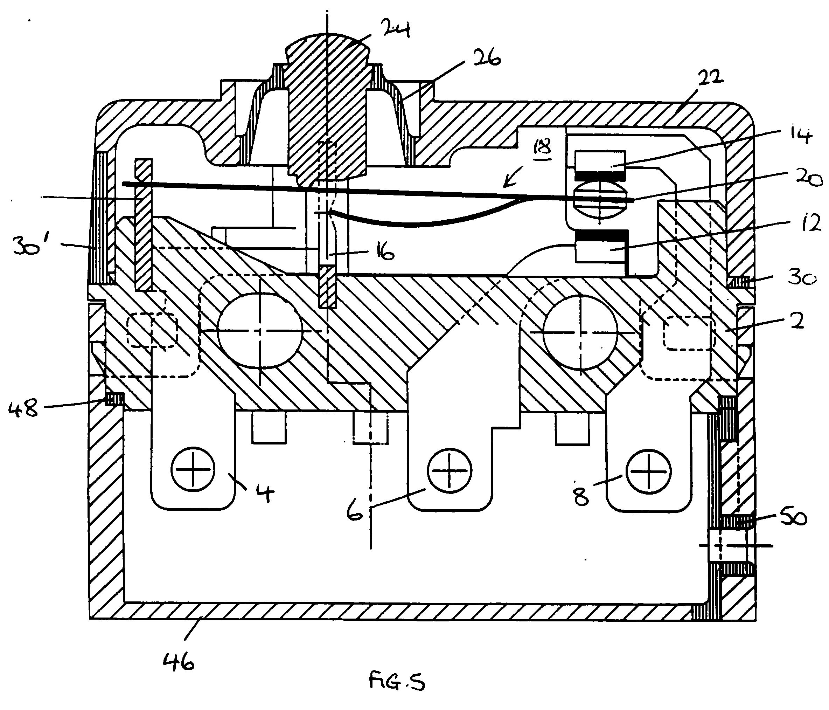

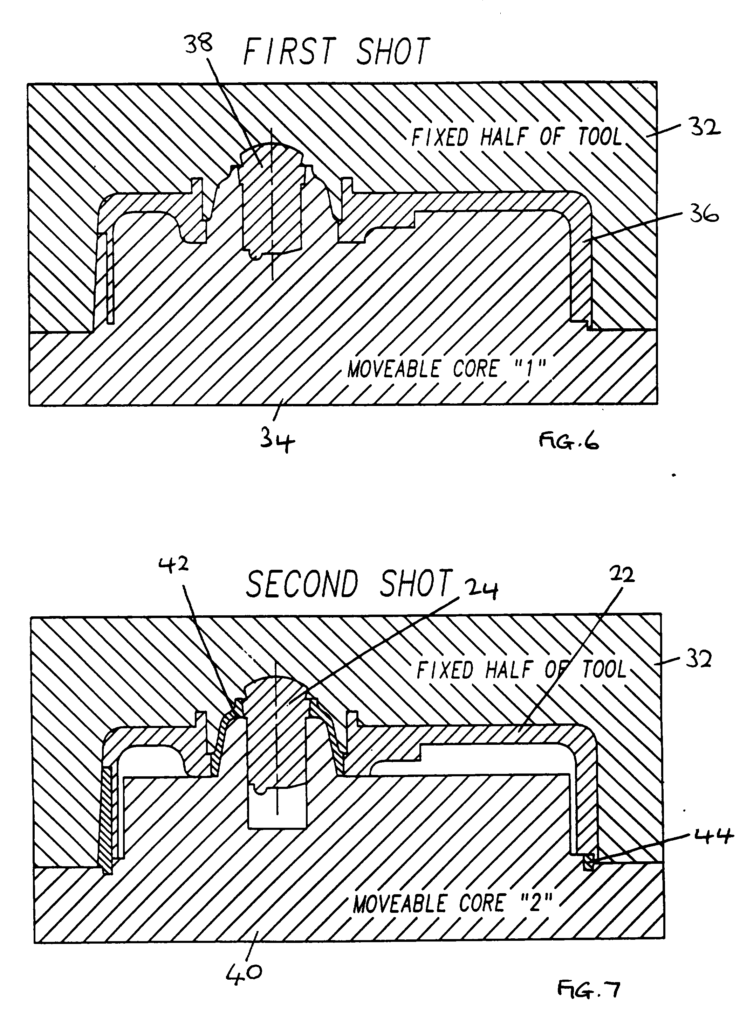

The lid portion 22 is injection moulded from a glass-filled polyamide and includes an aperture therethrough in which is located an operating plunger 24 of the same material. A flexible cowl 26, typically of a thermoplastic elastomer, surrounds the plunger 24 and is integrally bonded to both the plunger 24 and the defining edge of said aperture in the lid portion 22 as clearly seen in Figs. 1 and 4 to effect a seal between the plunger 24 and the lid portion 22 whilst permitting upward and downward movement of the plunger 24 relative to the lid portion 22 between the positions shown in Figs. 1 and 4. The plunger 24 is guided in said movement by co-operation with the support member 16. More particularly, and as best seen in Fig. 2, the support member 16 is of generally U-shape in front view, the plunger 24 being provided with a pair of grooves 28 one in each side face thereof. The inside edges of the upstanding arms of the support member 16 are received one in each groove 28 in the plunger 24 whereby said arms and grooves 28 co-operate to guide the plunger 24 in its upward and downward movement, said movement serving to alter the condition of the snap-action mechanism, and therefore of the switch itself, in conventional manner.

The lid portion 22 of the switch is a snap-fit on the base portion 2 to encapsulate the snap-action mechanism 18 and associated components therein, a peripheral seal 30 reacting between the abutting faces of the lid portion 22 and the base portion 2 to effect a seal therebetween.

More particularly, the seal 30 is of the same thermoplastic elastomer material as the cowl 26 and, as with the cowl, is integrally bonded to the periphery of the lid portion 22.

The method by which the lid portion 22, cowl 26 and seal 30 are integrated with one another can be appreciated with reference to Figs. 6 and 7.

Referring to these figures, there is shown a moulding tool including a fixed body portion 32 and a first removable core 34 which together define volumes 36 and 38 shaped to comprise the lid portion 22 and plunger 24 of the switch. The material of these components, typically a glass-filled polyamide, is injected into the tool to define the lid portion 22 and the plunger 24.

The first core 34 is then removed from the tool and is replaced by a second core 40 which, together with the body portion 32 and the pre-formed components 22 and 24, defines further interconnected volumes 42, 44 shaped to comprise the cowl 26 and peripheral seal 30. The material of these components, typically a thermoplastic elastomer, is injected into the tool to define the cowl 26 and the seal 30.

The cowl 26 is of generally annular configuration with the inner periphery thereof abutting the plunger 24 and the outer periphery thereof abutting the sidewalls of a defining aperture in the lid portion 22.

The seal 30 is formed in, to engage with, a peripheral recess formed around the lower surface of the lid portion 22, and includes an upstanding one end portion 30' located externally of the lid portion 22.

The materials of the first and second moulding stages are such that, at all interfaces and as a result of the heat generated during the moulding process, said materials are welded together to form permanent bonds therebetween.

So the cowl 26 is effectively integrated with the lid portion 22 and the plunger 24 to effect a flexible seal therebetween, while the seal 30 is permanently attached to the underside of the lid portion 22.

Thus there is provided a plunger operated snap-action microswitch in which the lid portion, the plunger, the flexible cowl between the lid portion and the plunger, and the peripheral seal around the lid portion constitute a single component which, together with a snap-action mechanism and a preformed base region in which are encapsulated the terminals of the switch, enables the switch to be assembled from only three parts, thereby making such assembly a much more convenient, quick and therefore inexpensive exercise compared with conventional methods.

The moulding tool, instead of incorporating two removable cores 34, 40, may be provided with a single core comprising a plurality of adjustable components the positions of which, relative to the fixed body portion 32, can be altered to define the various volumes 36, 38, 42, 44 within the tool as and when required.

Referring to Fig. 5, the switch may be provided with a bottom cover indicated generally at 46 which is a sealing snap fit onto the base portion 2 to encapsulated the terminals 4, 6, 8.

More particularly, the cover 46 is injection moulded from a glass-filled polyamide with an integral peripheral seal 48 and an annular end gland 50 of a thermoplastic elastomer being formed during the injection moulding process in a manner similar to that described above in relation to the lid portion 22 and the seal 30. The materials of the cover 46, the seal 48 and the gland 50 are such that, at all interfaces and as a result of the heat generated during the moulding process, said materials are welded together to form permanent bonds therebetween. Thus the seal 48 and gland 50 are integral with the cover 46, and, on location of the cover 46 on the base portion 2, a seal is effected between the cover 46 and the base portion 2.

Prior to snap-fitting the cover 46 onto the base portion, the leads (not shown) from the terminals 4, 6, 8 are fed through the gland 50. The cover 46 is then snapped onto the base portion 2 to effect a seal therebetween without the necessity for injecting a sealing compound into the volume between the cover 46 and the base portion 2 as has been required heretofore.

## Claims

1. A snap-action electric microswitch comprising a housing including a base portion (2) from which project a plurality of electric terminals (4, 6, 8), a lid portion (22) for location on the base portion (2) to complete the housing, a snap-action mechanism (18) within the housing, an operating plunger (24) slidably mounted in the lid portion (22) to effect actuation of the snap-action mechanism (18) , a peripheral seal (30) between the lid portion (22) and the base portion (2) of the housing, and a flexible cowl (26) reacting between the plunger (24) and the lid portion (22) of the housing whereby the plunger (24) is sealingly mounted in the lid portion (22), characterised in that the lid portion (22) and plunger (24) are of a first plastics material and the cowl (26) is of a second plastics material, the lid portion (22), plunger (24) and cowl (26) being an integral, injection moulded unit, the first and second plastics materials being such that the abutting surfaces of the cowl (26) with the lid portion (22) and with the plunger (24) bond together during the injection moulding process.

2. A microswitch as claimed in claim 1 in which the peripheral seal (30) is of said second plastics material and is formed integrally with the lid portion (22) during the injection moulding process to be welded to the lower periphery of the lid portion (22) during said process.

3. A microswitch as claimed in claim 2 in which the lid portion (22) and plunger (24) comprise a glass-filled polyamide, and the cowl (26) and the peripheral seal (30) comprise a thermoplastic elastomer.

4. A microswitch as claimed in any one of claims 1 to 3 in which the housing further comprises a cover portion (46) sealingly located on the base portion (2) to encase the terminals (4, 6, 8), a peripheral seal (48) being located between the cover portion (46) and the base portion (2).

5. A microswitch as claimed in claim 4 in which the cover portion (46) is injection moulded, the peripheral seal (48) being formed integrally with the cover portion during the injection moulding process to be welded to the upper periphery of the cover portion (46) during said process.

6. A method of manufacturing a snap-action electric microswitch as claimed in any one of claims 1 to 5, the method comprising the steps of:
providing a moulding tool having a fixed upper portion (32) and at least one core (34, 40) capable of defining, together with said fixed upper portion (32), a first volume (36, 38) within the tool corresponding in shape with that of the lid portion (22) and the plunger (24) of the switch, and a second volume (42) within the tool corresponding in shape with that of the cowl (26), said second volume (42) communicating with regions of said first volume (36, 38);
defining said first volume (36, 38) within the moulding tool;
injecting a first plastics material into said first volume (36, 38) to form said lid portion (22) and said plunger (24);
defining said second volume (42) within the moulding tool, and
injecting a second plastics material into said second volume (42) to form said cowl (26),
the first and second plastics materials being welded together during the injection moulding process whereby the cowl (26) is bonded to both the lid portion (22) and the plunger (24) to effect a flexible seal therebetween.

7. A method as claimed in claim 6 in which the fixed upper portion (32) and the at least one core of the moulding tool are such that, on defining said second volume (42), a third volume (44) corresponding in shape with that of the peripheral seal (30) between the lid portion (22) and the base portion (2) of the housing is defined within the tool, the second and third volumes (42, 44) being interconnected whereby, on injection of said second plastics material into the second and third volumes (42, 44), a peripheral seal (3) is formed around, to be bonded to, the periphery of the lid portion (22).

8. A method as claimed in claim 6 or claim 7 in which the moulding tool includes a first removable core (34) which, together with the fixed upper portion (32), defines said first volume (36, 38), and a second removable core (40) which, together with the fixed upper portion (32), defines said second volume (42).

9. A method as claimed in claim 8 together with claim 7 in which the second removable core (40), together with the fixed upper portion (32), further defines said third volume (44).

## Patentansprüche

1. Elektrischer Schnappmikroschalter, umfassend ein Gehäuse, das einen Basisabschnitt (2) enthält, aus dem eine Vielzahl elektrischer Anschlüsse (4, 6, 8) vorragt, einen Deckelabschnitt (22) zur Anordnung auf dem Basisabschnitt (2), um das Gehäuse zu vervollständigen, einen Schnappmechanismus (18) im Gehäuse, einen Betätigungsplunger (24), der abgedichtet im Deckelabschnitt (22) montiert ist, um die Betätigung des Schnappmechanismus (18) zu bewirken, eine periphere Dichtung (30) zwischen dem Deckelabschnitt (22) und dem Basisabschnitt (2) des Gehäuses, sowie eine flexible Schutzkappe (26), die zwischen dem Plunger (24) und dem Deckelabschnitt (22) des Gehäuses wirkt, wodurch der Plunger (24) abgedichtet im Deckelabschnitt (22) montiert ist, dadurch gekennzeichnet, daß der Deckelabschnitt (22) und der Plunger (24) aus einem ersten Kunststoffmaterial bestehen und die Schutzkappe (26) aus einem zweiten Kunststoffmaterial besteht, wobei der Deckelabschnitt (22), der Plunger (24) und die Schutzkappe (26) eine einstückige, durch Spritzguß gebildete Einheit darstellen, wobei das erste und das zweite Kunststoffmaterial so beschaffen sind, daß die aneinander anliegenden Oberflächen der Schutzkappe (26) mit dem Deckelabschnitt (22) und mit dem Plunger (24) sich während des Spritzgußverfahrens miteinander verbinden.

2. Mikroschalter nach Anspruch 1, bei dem die periphere Dichtung (30) aus dem zweiten Kunststoffmaterial besteht und während des Spritzgußverfahrens einstückig mit dem Deckelabschnitt (22) ausgebildet wird, sodaß es während dieses Verfahrens an der unteren Peripherie des Deckelabschnitts (22) angeschweißt wird.

3. Mikroschalter nach Anspruch 2, bei dem der Deckelabschnitt (22) und der Plunger (24) glasgefülltes Polyamid und die Schutzkappe (26) und die periphere Dichtung (30) ein thermoplastisches Elastomer umfassen.

4. Mikroschalter nach einem der Ansprüche 1 bis 3, bei dem das Gehäuse weiters einen Abdeckabschnitt (46) umfaßt, der dichtend auf dem Basisabschnitt (2) angeordnet ist, sodaß er die Anschlüsse (4, 6, 8) einschließt, wobei eine periphere Dichtung (48) zwischen dem Abdeckabschnitt (46) und dem Basisbschnitt (2) angeordnet ist.

5. Mikroschalter nach Anspruch 4, bei dem der Abdeckabschnitt (46) durch Spritzguß geformt ist, wobei die periphere Dichtung (48) während des Spritzgußverfahrens einstückig mit dem Abdeckabschnitt ausgebildet wird, sodaß sie während dieses Verfahrens an der oberen Peripherie des Abdeckungsabschnitts (46) angeschweißt wird.

6. Verfahren zur Herstellung eines elektrischen Schnappmikroschalters nach einem der Ansprüche 1 bis 5, das folgende Schritte umfaßt:
das Bereitstellen eines Formungswerkzeugs mit einem feststehenden oberen Abschnitt (32) und zumindest einem Kern (34, 40), der gemeinsam mit dem feststehenden oberen Abschnitt (32) ein erstes Volumen (36, 38) innerhalb des Werkzeugs definieren kann, das in seiner Gestalt jener des Deckelabschnitts (22) und des Plungers (24) des Schalters entspricht, sowie ein zweites Volumen (42) innerhalb des Werkzeugs, das in seiner Gestalt jener der Schutzkappe (26) entspricht, wobei das zweite Volumen (42) mit Bereichen des ersten Volumens (36, 38) kommuniziert;
das Definieren des ersten Volumens (36, 38) innerhalb des Formungswerkzeugs;
das Einspritzen eines ersten Kunststoffmaterials in das erste Volumen (36, 38), um den Deckelabschnitt (22) und den Plunger (24) zu bilden;
das Definieren des zweiten Volumens (42) innerhalb des Formungswerkzeugs, und
das Einspritzen eines zweiten Kunststoffmaterials in das zweite Volumen (42), um die Schutzkappe (26) zu bilden;
wobei das erste und das zweite Kunststoffmaterial während des Spritzgußverfahrens zusammengeschweißt werden, wodurch die Schutzkappe (26) sowohl mit dem Deckelabschnitt (22) als auch dem Plunger (24) verbunden wird, um eine flexible Abdichtung dazwischen zu bewirken.

7. Verfahren nach Anspruch 6, bei dem der feststehende obere Abschnitt (32) und der zumindest eine Kern des Formungswerkzeugs so beschaffen sind, daß beim Definieren des zweiten Volumens (42) innerhalb des Werkzeugs ein drittes Volumen (44) definiert wird, dessen Gestalt jener der peripheren Dichtung (30) zwischen dem Deckelabschnitt (22) und dem Basisabschnitt (2) des Gehäuses entspricht, wobei das zweite und das dritte Volumen (42, 44) miteinander verbunden sind, wodurch beim Einspritzen des zweiten Kunststoffmaterials in das zweite und das dritte Volumen (42, 44) eine periphere Dichtung (3) um die Peripherie des Deckelabschnitts (22) herum gebildet wird, um damit verbunden zu werden.

8. Verfahren nach Anspruch 6 oder 7, bei dem das Formungswerkzeug einen ersten wegnehmbaren Kern (34) umfaßt, der gemeinsam mit dem feststehenden oberen Abschnitt (32) das erste Volumen (36, 38) definiert, sowie einen zweiten wegnehmbaren Kern (40), der gemeinsam mit dem feststehenden oberen Abschnitt (32) das zweite Volumen (42) definiert.

9. Verfahren nach Anspruch 8 gemeinsam mit Anspruch 7, bei dem der zweite wegnehmbare Kern (40) gemeinsam mit dem feststehenden oberen Abschnitt (32) weiters das dritte Volumen (44) definiert.

## Revendications

1. Microrupteur électrique instantané comprenant un boîtier incluant une partie de base (2) à partir de laquelle font saillie plusieurs bornes électriques (4, 6, 8), une partie de couvercle (22) pour la localisation sur la partie de base (2) afin de compléter le boîtier, un mécanisme instantané (18) dans le boîtier, un plongeur de service (24) monté de façon coulissante dans la partie de couvercle (22) pour effectuer l'actionnement du mécanisme instantané (18), un élément d'étanchéité périphérique (30) entre la partie de couvercle (22) et la partie de base (2) du boîtier et un capuchon flexible (26) réagissant entre le plongeur (24) et la partie de couvercle (22) du boîtier par quoi le plongeur (24) est monté de manière étanche dans la partie de couvercle (22), caractérisé en ce que la partie de couvercle (22) et le plongeur (24) sont réalisés en une première matière plastique et que le capuchon (26) est réalisé en une deuxième matière plastique, la partie de couvercle (22), le plongeur (24) et le capuchon (26) constituant une unité intégrale moulée par injection, les première et deuxième matières plastiques étant telles que les surfaces de butée du capuchon (26) avec la partie de couvercle (22) et avec le plongeur (24) so lient pendant le procédé de moulage par injection.

2. Microrupteur selon la revendication 1, dans lequel l'élément d'étanchéité périphérique (30) est réalisé dans ladite deuxième matière plastique et est réalisé intégralement avec la partie de couvercle (22) pendant le procédé de moulage par injection pour être soudé à la périphérie inférieure de la partie de couvercle (22) pendant ledit procédé.

3. Microrupteur selon la revendication 2, dans lequel la partie de couvercle (22) et le plongeur (24) comprennent un polyamide rempli de verre, et le capuchon (26) et l'élément d'étanchéité périphérique (30) comprennent un élastomère thermoplastique.

4. Microrupteur selon l'une des revendications 1 à 3, dans lequel le boîtier comporte en outre une partie de couvercle (46) située de manière étanche sur la partie de base (2) pour renfermer les bornes (4, 6, 8), un élément d'étanchéité périphérique (48) étant situé entre la partie de couvercle (46) et la partie de base (2).

5. Microrupteur selon la revendication 4, dans lequel la partie de couvercle (46) est moulée par injection, l'élément d'étanchéité périphérique (48) étant réalisé intégralement avec la partie de couvercle pendant le procédé de moulage par injection pour être soudé à la périphérie supérieure de la partie de couvercle (46) pendant ledit procédé.

6. Procédé de fabrication d'un microrupteur électrique instantané selon l'une des revendications 1 à 5, le procédé comprenant les étapes consistant à :
réaliser un outil de moulage possédant une partie supérieure fixe (32) et au moins un noyau (34, 40) apte à définir, conjointement avec ladite partie supérieure fixe (32), un premier volume (36, 38) dans l'outil dont la forme correspond à celle de la partie de couvercle (22) et du plongeur (24) de l'interrupteur, et un deuxième volume (42) dans l'outil dont la forme correspond à celle du capuchon (26), ledit deuxième volume (42) communiquant avec des régions dudit premier volume (36, 38) ;
définir ledit premier volume (36, 38) dans l'outil de moulage ;
injecter une première matière plastique dans ledit premier volume (36, 38) pour former ladite partie de couvercle (22) et ledit plongeur (24) ;
définir ledit deuxième volume (42) dans l'outil de moulage ; et
injecter une deuxième matière plastique dans ledit deuxième volume (42) pour former ledit capuchon (26),
les première et deuxième matières plastiques étant assemblées par soudage pendant le procédé de moulage par injection par quoi le capuchon (26) est lié à la fois à la partie de couvercle (22) et au plongeur (24) pour réaliser une étanchéité flexible entre ceux-ci.

7. Procédé selon la revendication 6, dans lequel la partie supérieure fixe (32) et le noyau, dont au moins un est prévu, de l'outil de moulage sont tels que, lors de la définition dudit deuxième volume (42), un troisième volume (44) dont la forme correspond à celle de l'élément d'étanchéité périphérique (30) entre la partie de couvercle (22) et la partie de base (2) du boîtier est défini dans l'outil, les deuxième et troisième volumes (42, 44) étant interconnectés par quoi lors de l'injection de ladite deuxième matière plastique dans lesdits deuxième et troisième volumes (42, 44), un élément d'étanchéité périphérique (3) est formé autour, pour être lié à la périphérie de la partie de couvercle (22).

8. Procédé selon la revendication 6 ou la revendication 7, dans lequel l'outil de moulage inclut un premier noyau amovible (34) qui, conjointement avec la partie supérieure fixe (32) définit ledit premier volume (36, 38) et un deuxième noyau amovible (40) qui, conjointement avec la partie supérieure fixe (32), définit ledit deuxième volume (42).

9. Procédé selon la revendication 8 conjointement avec la revendication 7, dans lequel le deuxième noyau amovible (40), conjointement avec la partie supérieure fixe (32), définit en outre ledit troisième volume (44).
